# EUROPEAN PATENT APPLICATION

(11) **EP 2 826 795 A1**
(43) Date of publication of application: **21.01.2015**
(21) Application number: 13003618.9
(22) Date of filing: 18.07.2013
(51) Int. Cl.: C08F 4/22, C08F 4/24, C08F 10/02, C08F 4/02

(54) **Chromium(III) silicate catalysts suitable for PE synthesis**

(71) Applicant: ETH Zurich, 8092 Zurich (CH)
(72) Inventor: Copéret, Christophe, 8037 Zürich (CH); Conley, Matthew, 8002 Zürich (CH); Delley, Murielle, 8050 Zürich (CH)

(57) **Abstract**

Molecular precursor chromium compounds and chromium on silica catalyst precursors suitable for use in producing chromium on silica catalysts are disclosed. The molecular precursor compounds can be chromium(II) and/or chromium(III) and/or chromium (IV) compounds wherein all ligands are easily removable, in particular ligands selected from the group consisting of anionic ligands of the type -O-CR³R⁴-CH-R¹R² or -O-Si-(O-CR³R⁴-CHR¹R²)₃ wherein R1, R2, R3 and R4 may be the same or different and may be any group that does not affect decomposition of the ligand via elimination of beta-hydrogen from -CR³R⁴-CH-R¹R², amide anionic ligands of the type -N-Si-R⁵R⁶R⁷ and/or -N-C-R⁵R⁶R⁷, wherein R⁵, R⁶ and R⁷ can be the same or different and are preferably selected from hydrogen, methyl groups, ethyl groups, n-propyl groups, iso-propyl groups, tert-butyl groups or aromatic groups; as well as coordinating solvents. These molecular precursors can be grafted to silica and - if need be - either before or after heat treatment during which the ligands are removed, oxidized to Cr(III). The chromium on silica catalyst is characterized by the absence of any organic ligands.

## Description

### Technical Field

The present invention concerns polyethylene (PE) synthesis, in particular PE synthesis based on a Phillips type catalyst.

### Background Art

Polyethylene (PE) is a commodity material that is ubiquitous in modem society. PE is encountered in countless applications ranging from the mundane to the essential: plastic bags, water bottles, food packaging, automotive parts, wires, pipes, and medical packs are only a few examples of how PE permeates everyday life. PE is produced on very large scales using processes tailored to the particular need of the final polymeric material. Over 80 million tons of PE are produced annually, a figure likely to rise.

Though the formation of PE from ethylene is exothermic, unless very high pressures are used with traces of oxygen to trigger radical polymerization, a catalyst containing a transition metal is needed for polymerization. Karl Ziegler and Giulio Natta discovered heterogeneous alkylaluminum activated titanium catalysts (TiClx/MgCl₂) that have evolved over several decades. Though the mechanism of these catalysts is not known, a common assumption is that Ti-alkyl species are the active polymerization sites. This mechanistic proposal inspired organometallic chemists to synthesize soluble Zr-variants and Ti-variants of the Ziegler-Natta catalyst that led to the isolation of cationic 14-electron single-site metallocene catalysts. This concept has advanced considerably in the past twenty years with the advent of "chain-shuttling" catalysts that offer intriguing material properties; and more recently cationic or neutral nickel and palladium complexes that can even tolerate polar functionalities.

A few years prior to the discovery of the titanium catalysts Robert Banks and J. Paul Hogan at Phillips Petroleum found that chromium trioxide supported on silica polymerizes ethylene. Using the Cr/SiO₂ composition, commonly referred to as Phillips catalyst, 40-50 % of high density PE is produced globally. The Phillip's catalyst polymerizes ethylene without an activator, a unique feature among olefin polymerization catalysts. The catalyst precursor is prepared by impregnation of CrO₃ on silica, which is then calcined at high temperatures. The calcination step is necessary to attach the Cr(VI) center to the silica via chromate esters. The chromates can be present as monomers, dimers, or polymeric species. Due to the high mobility of the Cr(VI) species on the silica surface the precatalyst is usually depicted as a monomeric chromium site. Ethylene polymerization occurs when the surface bound Cr(VI) species are activated *in-situ* with ethylene to form a "reduced" chromium species that is the proposed active site. Because the Cr(VI) species must be reduced prior to polymerization initiation there is a pronounced induction period for these materials. Alternatively the Cr(VI) containing silica material can be pre-reduced in the presence of carbon monoxide at 300 °C to produce a catalyst that polymerizes ethylene with a less pronounced induction period.

While the mechanism of the Cr/SiO₂ catalyst remains unknown, a general consensus has been reached from X-Ray Absorption Spectroscopy (XAS) that isolated Cr(II) sites on the silica surface are responsible for catalytic activity. Similarly to the case of the Ziegler-Natta catalyst, organometallic chemists embarked on elucidating the mechanism of the Phillips catalyst by synthesizing homogeneous equivalents that could mimic the surface Cr environment. By definition this is a difficult task because the chromium coordination environment should only contain (X₃SiO)₂Cr moieties, which is difficult to obtain and to stabilize in solution due to the propensity of low-coordinate Cr-complexes to form strong metal-metal multiple bonds. Despite the lack of discrete (R₃SiO)₂Cr complexes, detailed studies have been conducted with homogeneous Cr(II) and Cr(III) complexes. Extensive studies of Cp^{*}Cr (Cp* = 1,2,3,4,5-cyclopentadienyl) complexes revealed that neutral Cr(II) complexes do not initiate ethylene polymerization, though related Cr(III) cations such as Cp^{*}Crk⁺ and (nacnac)CrR⁺ polymerize ethylene. The only so far known cases of ethylene polymerization activity of homogeneous Cr(II) complexes involve the presence of alkylaluminium reagents, which are not present in the Phillip's catalyst.

Only *ca.* 7% of the Cr centers are active in polymerization, a major hindrance in the study of this catalysts. The low quantity of Cr-active sites is not surprising because a wide range of Cr-species are likely to be present on the amorphous silica surface, and little effort is made to control the addition of Cr(VI) to silica on the molecular level. As a consequence the study of these processes involves complex spectroscopic analysis using various techniques in tandem (IR, UV-Vis, EPR, etc.) to obtain data about a given Cr-species.

In principle, grafting a molecularly precise organometallic complex onto a silica surface with controlled silanol site density could yield a well-defined Cr/SiO₂ material amenable to spectroscopic studies. This strategy is often referred to as Surface Organometallic Chemistry (SOMC), and has found applications ranging from supported metallocene olefin polymerization catalysts, single-site olefin metathesis, olefin epoxidation catalysts, and highly reactive metal-hydride species that can activate alkanes or dissociate dinitrogen. In the context of Cr/SiO₂ polymerization Cr(IV) alkyl complexes(*43, 44*), chromium acetylacetonate (*45, 46*), tris(bis(trimethylsilyl)methyl chromium (III) (*64*, *65, 66*) and CrO₂Cl₂(*47, 48*) have been supported on silica, and display activity in ethylene polymerization; though in each case the complex used does not allow access to "ligandless" chromium silicates, in which the metal center interacts only with the silica support. To date, the debate concerning the active sites of Phillip's catalysts is still vigorous, and there have been no reports on formation of well-defined "ligandless" Cr-silicates using molecular strategies.

Since the ligand environment around the chromium center is critical to the success of discrete metal silicate formation, the intent of the present invention was to provide well defined Phillip's like chromium on silica catalysts, preferably such catalysts that are easily obtainable and/or that can be prepared with different activities due to more or less concentrated active chromium centers and thus may influence the polymerization rate and/or polymerization grade.

### Disclosure of the Invention

Hence, it is a general object of the invention to provide a molecular precursor chromium compound (also termed chromium molecular precursor or chromium molecular precursor compound) suitable for use in producing a silica supported chromium catalyst, further on termed chromium on silica catalyst and such use.

It is another object of the invention to provide a chromium on silica catalyst precursor that may easily be converted into a chromium on silica catalyst.

It is yet another object of the present invention to provide a chromium on silica catalyst suitable for ethylene polymerization.

Other objects of the present invention are to provide a method for producing a chromium on silica catalyst precursor and a method for producing a chromium on silica catalyst starting from a chromium on silica catalyst precursor and a method for producing a molecular precursor chromium compound.

Another object is a method for producing polyethylene (PE) using such chromium on silica catalyst.

Still another object is the use of a chromium on silica catalyst for producing polyethylene (PE).

Now, in order to implement these and still further objects of the invention, which will become more readily apparent as the description proceeds, the molecular precursor chromium compound suitable for use in producing a chromium on silica catalyst is manifested by the features that it is a chromium(II), a chromium (III) or a chromium(IV) compound with all ligands selected from silanolates or alcoholates or amides that can be decomposed upon thermal treatment.

The advantage of the catalysts of the present invention is that they are produced from well defined and predictably decomposable precursors resulting in the formation of well-defined Cr(II), Cr(III) and Cr(IV) monomeric or dimeric sites on silica surfaces. While Cr(ll) species were found to display polymerization activity lower than their Cr(III) analogues, the Cr(III) containing materials were found to exhibit activities higher than Phillip's catalyst, while maintaining similar polymer molecular weight properties.

Dependent on the ligands, the molecular precursors of the present invention in general are monomers or dimers.

The term ligand as used in the scope of the present invention is any group present in or originating from the molecular precursor chromium compound.

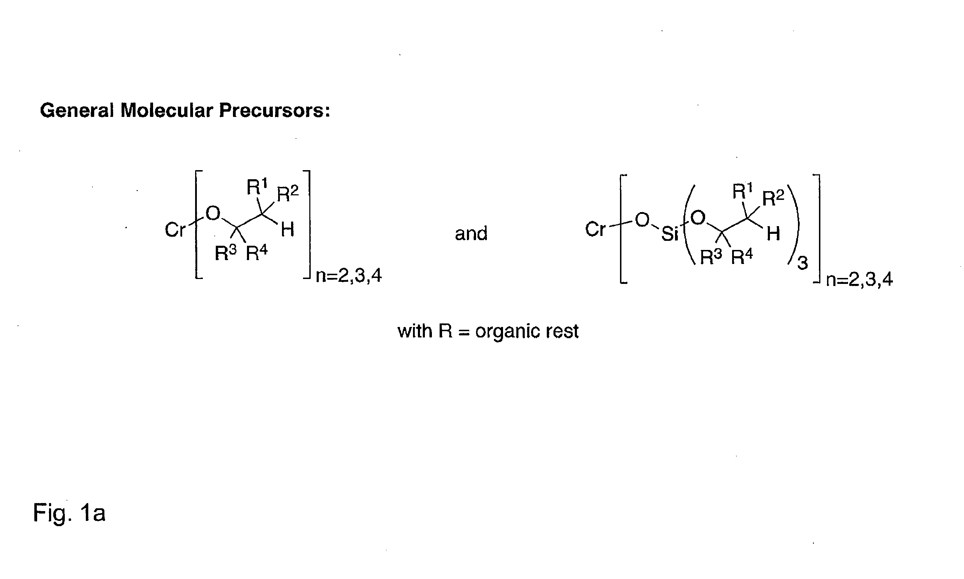

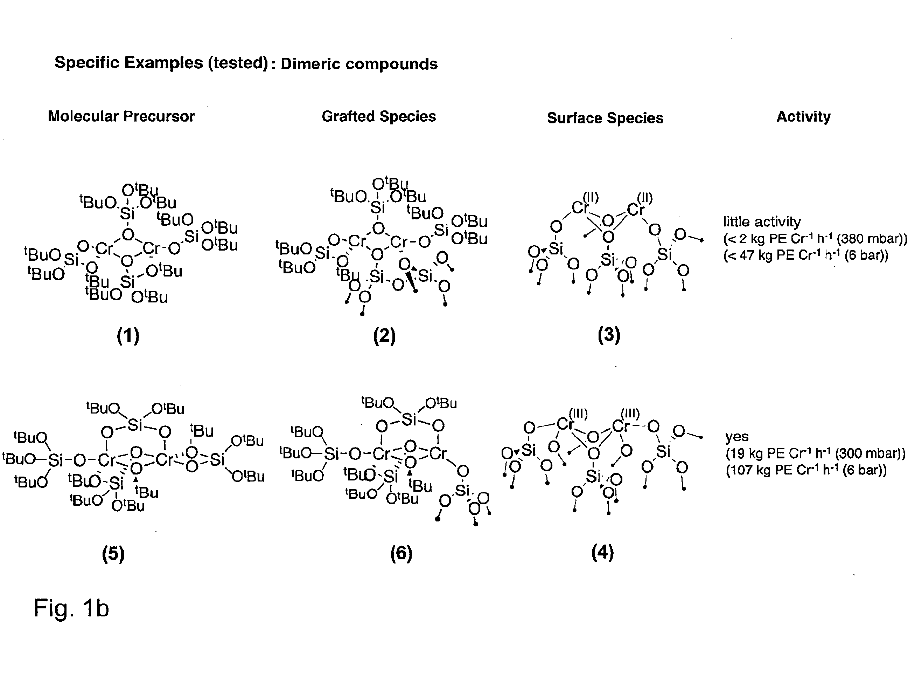

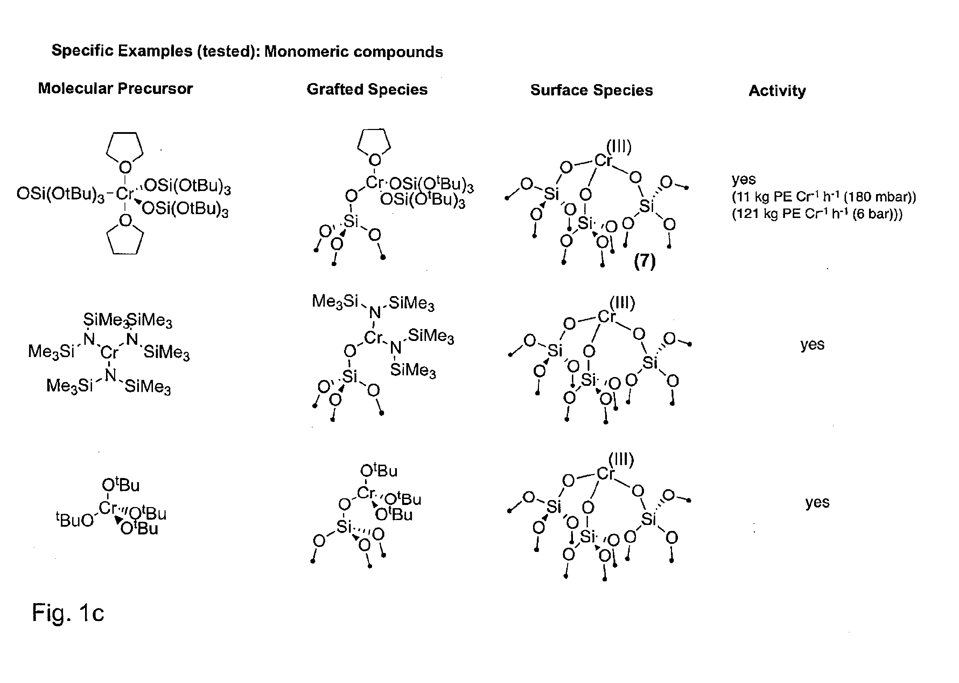

The ligand environment around the chromium center is critical for the success of discrete metal silicate formation. In the scope of the present invention it was found that for the production of the inventive Cr(III) catalysts it is relevant that the soluble precursors comprise at least one group suitable for covalently attaching the Cr(III) catalyst to the silica surface and the other ligands being easily removable like decomposable to result in a carbon free; in particular a Cr(III)-catalyst with exclusively -O-Si- coordination. Such easily removable ligands are e.g. coordinated solvents, such as ethers like thf, or amines, or nitrogen containing heterocycles and/or anionic groups of type -O-CR³R⁴-CH-R¹R² and/or -O-Si-(O-CR³R⁴-CH-R¹R²)₃ wherein R1, R2, R3 and R4 may be the same or different and may be any group that does not affect decomposition of the ligand via elimination of the beta-hydrogen from -CR³R⁴-CH-R¹R², and/or easily removable covalently bound amides of the type -N-(Si-R⁵R⁶R⁷)₂ and/or -N-(C-R⁵R⁶R⁷)₂ wherein R⁵, R⁶ and R⁷ can be the same or different and are preferably selected from hydrogen, methyl groups, ethyl groups, n-propyl groups or iso-propyl groups, tert-butyl groups or aromatic groups, in particular an amide like hexamethyldisilazide. Preferred groups R1 to R4 independently from each other are selected from the group consisting of hydrogen, methyl groups, ethyl groups, n-propyl groups, iso-propyl groups, tert-butyl groups or aromatic groups, more preferred R¹ to R⁴ are independently from each other selected from the group consisting of hydrogen, methyl or phenyl. For R¹ and R² hydrogen is presently most preferred and for R³ and R⁴ methyl groups. Such compounds are e.g. monomers or dimers wherein all ligands are -O-CR³R⁴-CH-R¹R² or -O-Si-(O-CR³R⁴-CHR¹R²)₃ (see e.g. Figure 1) or combinations thereof-. A preferred group is of the type -O-Si-(O-CR³R⁴-CH-R¹R²)₃, in particular *tri-tert-*butoxysilanolate (-OSi(O^{t}Bu)₃) because chromium complexes containing this ligand are known to decompose at relatively low temperatures (e.g. 200 °C) to yield silicate materials. Examples of molecular precursor chromium compounds suitable for use in producing chromium on silica catalyst precursors and chromium on silica catalysts are Cr(N(Si(CH₃)₃)₂)₃, Cr(O^{t}Bu)₄, Cr(OSi(OtBu)₃)₃*2thf, C₄₈H₁₀₈Cr₂O₁₇Si₄ **(5),** [Cr(OSi(O^{t}Bu)₃)₂]₂, in particular [Cr(OSi(O^{t}Bu)₃)₂]₂ and C₄₈H₁₀₈Cr₂O₁₇Si₄ **(5).**

These molecular precursors can be grafted to silica surfaces to give chromium on silica catalyst precursor. In these catalyst precursors at least one ligand, usually one or possibly two ligands is/are replaced by a surface 0-Si-0 group (≡Si0) by grafting. Via decomposition it is possible to remove all remaining ligands. Thus, in chromium on silica catalyst precursors in general one (or possibly 2) ligand(s) is(are) replaced or all ligands are removed or replaced.

Preferred chromium on silica catalyst precursors that still comprise ligands are [(≡SiO)Cr₂(OSi(O^{t}Bu)₃)₃] or C₄₈H₁₀₈Cr₂O₁₇Si₄ grafted on silica (6) or [(≡SiO)Cr(OSi(O^{t}Bu)₃)₂(thf)], and preferred chromium(II) on silica catalyst precursors with all ligands removed or replaced by surface 0-Si-O group (≡Si0) is [(≡SiO)₄Cr₂].

A preferred chromium on silica catalyst is a Cr(III) compound attached to the silica surface via Si-O bonds, wherein all ligands have been either removed or replaced by a surface 0-Si-0 group (≡Si0), in particular [(≡SiO)₆Cr₂] or [(≡SiO)₃Cr].

A molecular precursor chromium compound may be obtained by a method comprising treating a Cr(II) and/or a Cr(III) and/or a Cr(IV) starting compound with starting-ligands that are so weakly bound that they can easily be removed/replaced by stronger binding ligands. Such starting compound is treated with one or more ligand precursor(s), like protonated ligand(s) or metal salts of the ligand(s), in particular the sodium or potassium salts, wherein the ligand(s) are as defined above under conditions that allow coordination of the one or more ligands, in particular by reacting a slurry of the Cr(II) or Cr(III) or Cr(IV) starting compound in a non coordinating solvent at temperatures of -40 to 150°C, preferentially at temperatures comprised between 15 and 40 °C. Suitable starting compounds comprise hexamethyldisilazide or chloride, optionally together with solvent ligands (e.g. thf), in particular Cr(HMDS)₂*2thf or Cr(HMDS)₃*(70)* or CrCl₃*3thf or CrCl₃ or CrCl₂*2thf or CrCl₂ or mixtures thereof.

The molecular precursor chromium compounds may be used to being grafted to silica.

The silica used for preparing the chromium on silica catalyst may be pretreated to generate a predetermined number of reactive surface SiOH groups for binding catalyst.

A chromium on silica catalyst precursor that still has ligands bound to the Cr center may be prepared by treating silica with a molecular precursor chromium compound, said compound being a Cr(II) and/or a Cr(III) and/or a Cr(IV) molecular precursor chromium compound. A chromium(II) on silica catalyst precursor that has no ligands bound to the Cr center can be prepared by heat treating a chromium on silica catalyst precursor that still has ligands bound to the Cr center, e.g. under vacuum like a pressure of 1 mbar or lower, in particular 10⁻⁵ mbar, or in a flow of an inert gas, like He, Ar, N₂, at a temperature comprised between 100 and 900 °C, preferably between 200 and 700 °C and more preferably between 220 and 500 °C. Dependent on the temperature, the vacuum or the inert gas flow, the reaction may be performed for > 1 minute, like >30 minutes, preferably > 1.5 hours, often > 2 hours.

A chromium on silica catalyst may be prepared by either oxidizing a chromium(II) on silica catalyst precursor that has no ligands bound to the Cr center or by heat treating a chromium(III) on silica catalyst precursor that still has ligands bound to the Cr center for a time and at a temperature suitable for removing all the ligands, in particular under vacuum, like a pressure of 500 mbar or lower, in particular 10⁻⁵ mbar, or in a flow of an inert gas, like He, Ar, N₂, at a temperature comprised between 100 and 900 °C, preferably between 200 and 700 °C and more preferably between 220 and 500 °C. Dependent on the temperature, the vacuum or the inert gas flow, the reaction may be performed for > 1 minute, like >30 minutes, preferably > 1.5 hours, often > 2 hours.

In an alternative method, a chromium on silica catalyst may be prepared in a similar manner starting from Cr (IV). The molecular precursors are Cr(IV) compounds with ligands as described above and the grafting and further processing can be done in a similar manner as described herein. One example of a molecular Cr(IV) precursor, a Cr(IV) on silica catalyst precursor and a catalyst that is formed from the Cr(lV) on silica catalyst precursor by mere heat treatment as described herein is found in Figure 1. As indicated, the structure of the final catalyst has not yet been finally determined and it is not yet sure whether the active catalyst is Cr(IV), Cr(III) or a mixture of Cr(IV) and Cr(III). In any case, the chromium on silica catalyst obtained starting from Cr(IV) molecular precursor is active.

Some of the chromium compounds used as molecular chromium precursor compounds as such are known, but not for producing silica catalyst precursors of the present invention. Such known compounds are Cr(OSi(OtBu)₃)₃*2thf *(67),* Cr(O^{t}Bu)₄ *(68)* Cr(O^{t}Bu)₃(O-Si(O^{t}Bu)₃)*(69),* Cr(O^{t}Bu)₂(O-Si(O^{t}Bu)₃)₂*(69)*,Cr(HNEt₂)₂(O-Si(O^{t}Bu)₂*(54)*, and Cr(HNEt₂)₂(O-Si(O^{t}Bu)₃*(54)*.

Irrespective of the time of an oxidation step such step can suitably be performed with N₂O, preferably at a temperature comprised between 20 to 300°C, more preferred between 20 to 150 °C, most preferred at about 100 °C. At high temperatures such as 300°C, the reaction will usually be finished within < 30 minutes, at 150 °C within about 30 minutes and at 100 °C within about 1 hour. At lower temperatures, i.e. temperatures close to 20°C reaction times of about 14 hours have been found.

As can be seen above and from the examples, the precursors of the invention can easily be prepared and grafted to the silica surface in predetermined amounts and then converted to the active catalyst. The inventive method allows the silica to be loaded with a predetermined amount of catalyst thereby generating catalysts with more or less polymerization activating centers so that the polymerization can be regulated/controlled to some extent.

Also an object of the present invention is a method for producing polyethylene (PE) said method comprising polymerizing ethylene at a pressure of 100 mbar to 50 bar, preferably 1 bar to 25 bar, in particular 6 bar and in the presence of a chromium(III) on silica catalyst of the present invention.

Still a further object of the present invention is the use of a chromium(III) on silica catalyst for producing polyethylene (PE), in particular for producing polyethylene (PE) in the gas phase or in a slurry containing an organic solvent.

Besides of the easy manufacturing and the surface coverage that can be predetermined, a further advantage of the inventive catalysts is the absence of any organic ligand. This absence of organic ligands results in a very pure polyethylene since no ligand can act as chain terminator.

### Brief Description of the Drawings

The invention will be better understood and objects other than those set forth above will become apparent when consideration is given to the following detailed description thereof. Such description makes reference to the annexed drawings, wherein:
**Figure 1** shows formulas of some specific precursors and catalysts of the present invention, wherein Figure la gives general formulas of some molecular precursor chromium compounds, Figure 1b specific examples of dimeric compounds and Figure 1c specific examples of monomeric compounds.
**Figure 2** shows reaction of Cr(HMDS)₂*2thf with HOSi(O^{t}Bu)₃ to give [Cr(OSi(O^{t}Bu)₃)₂]₂ (1). The solid-state structure of one independent molecule **of (1)** obtained from X-Ray diffraction is shown at 50% probability. Methyl groups from the -OSi(O^{t}Bu)₃ ligands, and all H-atoms are removed for clarity. Relevant bond distances are discussed in the text.
**Figure 3** shows grafting of (1) on SiO₂₋₇₀₀ to form [(=SiO)Cr₂(OSi(O^{t}Bu)₃)₃] **(2)** followed by thermal decomposition under high vacuum to yield [(=SiO)₄Cr₂] **(3).**
**Figure 4** shows XANES spectra of ([Cr(OSi(O^{t}Bu)₃)₂]₂ **(1),** [(=SiO)Cr₂(OSi(O^{t}Bu)₃)₃] (2), [(=SiO)₄Cr₂] (3), [(=SiO)₆Cr₂] (4), and C₄₈H₁₀₈Cr₂O₁₇Si₄ **(5)** collected in transmission mode at 298 K.
**Figure 5** shows reaction of **(1)** with N₂O to give **(5).** The solid-state structure of (5) obtained from X-Ray diffraction is also shown. Methyl groups from the -OSi(O^{t}Bu)₃ ligands, and all H-atoms are removed for clarity.
**Figure 6** shows ethylene polymerization activity of chromium catalysts at low ethylene pressure monitored by IR spectroscopy; a) [(≡SiO)Cr₂(OSi(O^{t}Bu)₃)₃]), b) [(≡ SiO)₄Cr₂], c) [(≡SiO)₆Cr₂], d) CO reduced Phillips catalyst.

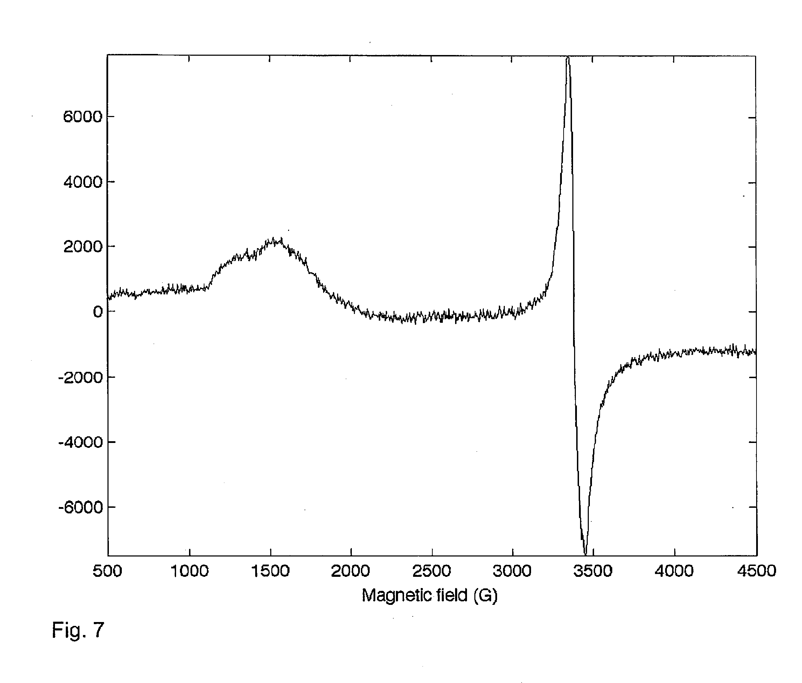

**Figure 7** shows the X-band (9.5 GHz) EPR spectrum of [(SiO)₃Cr], measured at 8 mW and 110 K with modulation amplitude of 5 G.

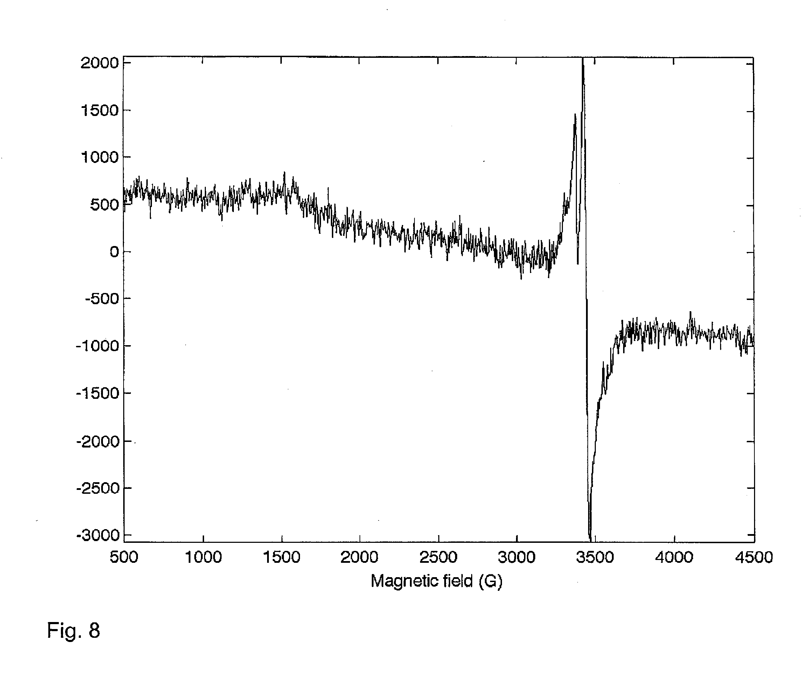

**Figure 8** shows the X-band (9.5 GHz) EPR spectrum of [(≡SiO)₆Cr₂], measured at 8 mW and 110 K with modulation amplitude of 5 G.
**Figure 9** shows the X-band (9.5 GHz) EPR spectrum of [(≡SiO)₃Cr] prepared from Cr(O^{t}Bu)₄, measured at 32 mW and 110K with modulation amplitude of 1 G.
**Figure 10** shows the IR spectrum of adsorbed CO onto [(≡SiO)₄Cr₂] (3)., [(≡SiO)₆Cr₂] (4), and [(≡SiO)₃Cr] (7).

### Modes for Carrying Out the Invention

A suitable decomposable ligand is *tri-tert*-butoxysilanolate (-OSi(O^{t}Bu)₃). Chromium complexes such as (tBuO)₃CrOSi(OtBu)₃ or (tBuO)₂Cr(OSi(OtBu)₃)₂ *(69)* containing this ligand are known to decompose at relatively low temperatures (ca. 200 °C) to yield bulk silicate materials. Therefore this ligand was used in the following experiments.

Grafting a Cr(II) complex containing only -OSi(O^{t}Bu)₃ ligands on a silica (previously dehydroxylated at 700 °C to yield approx. 0.8 SiOH nm⁻²), followed by a thermal treatment was found to yield well-defined Cr(II) sites on the silica surface without additional ligands.

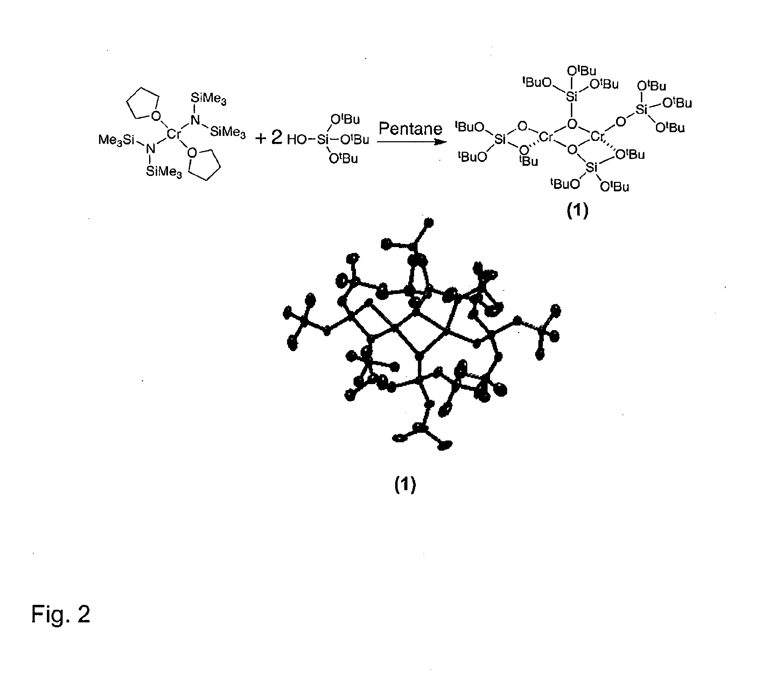

The synthesis of such compounds is quite simple, and can be performed starting from Cr[N(SiMe₃)₂]₂*2thf (thf= tetrahydrofuran). Contacting purple suspensions of Cr[N(SiMe₃)₂]₂*2thf in pentane in the presence of two equivalents of HOSi(O^{t}Bu)₃ results in homogenization of the solution and a color change from purple to deep blue (see Figure 2). Crystallization from hexamethyldisiloxane (HMDSO) gave a 60 % yield of the blue crystalline Cr(II) dimer [Cr(OSi(O^{t}Bu)₃)₂]₂, **(1).** The ¹H NMR spectrum of **(1)** showed a broad signal at 1.77 ppm (v_{1/2} = 530 Hz) in C₆D₆. The effective magnetic moment of **(1)** is µ_{eff} = 5.99 µ_{B} which is consistent with high-spin Cr(II) centers. The solid-state structure of **(1)** is shown in Figure 2. **(1)** crystallizes as two independent molecules in the unit cell with similar bond lengths and angles, one of which is shown in Figure 2. **(1)** contains the two chromium atoms in slightly distorted square planar geometries, typical for high spin Cr(II) species, with a butterflied diamond µ₂-disiloxy-dicromium core. The Cr-Cr distance in **(1)** is 2.884(2) A, which is outside the range of significant metal-metal bonding. The terminal Cr(2A)-O(1A) and Cr(1A)-O(4A) bonds are 1.934(4) and 1.984(4) A, respectively. As expected, the bridging Cr-O(2A) and Cr-O(3A) distances are slightly longer than the terminal Cr-O bonds. In addition to the covalent chromium-oxygen bonds in **(1),** the -OSi(O^{t}Bu)₃ ligand can also coordinate through the -O^{t}Bu fragments, which occurs to satisfy the distorted Cr(II) square planar geometry; these distances are significantly longer (2.109(4) and 2.167(4) A, respectively). These Cr-O bond distances are similar to other chromium siloxide complexes.

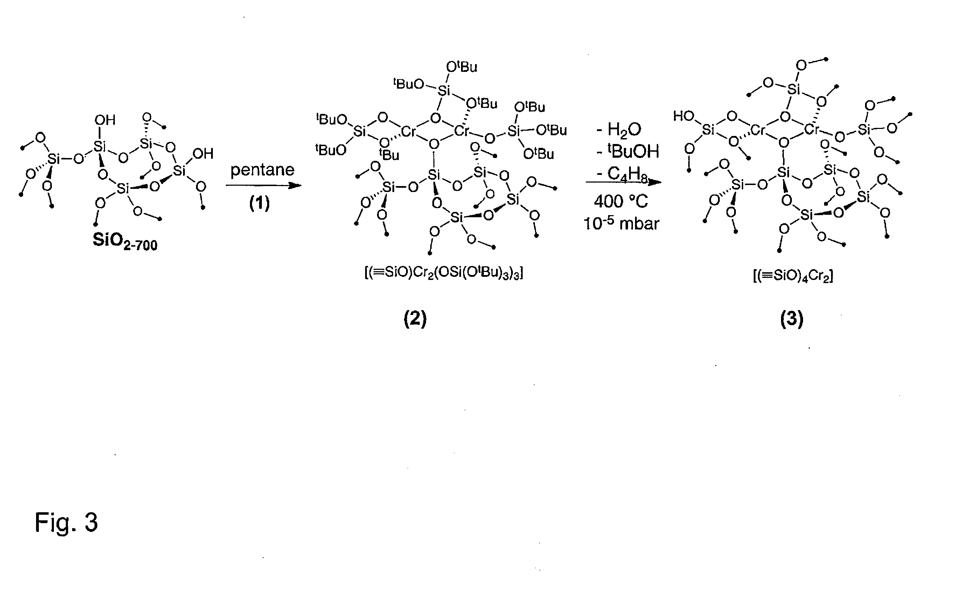

Contacting blue benzene solutions of [Cr(OSi(O^{t}Bu)₃)₂]₂ **(1)** with Aerosil-200 (dehydroxylated at 700 °C to yield approx. 0.26 mmol SiOH/g) results in immediate blue coloration of the solid. The infrared spectrum of this blue solid contains a v_{OH} vibration for hydrogen-bonded silanols. Consistent with this observation, 0.64 equiv of HOSi(O^{t}Bu)₃ was recovered per surface silanol, indicating that 0.16 mmol SiOH/g reacted during the chromium grafting (Figure 3). Chromium elemental analysis gave 1.60 % Cr, corresponding to 0.31 mmol Cr/g. This value is in close agreement with the expected loading of grafted Cr(II) dimers from the recovered HOSi(O^{t}Bu)₃ (expected = 0.32 mmol Cr/g). The Direct Reflectance Ultraviolet Visible (DRUV-Vis) spectrum contains a broad absorption band at 410 nm; the same absorption band was observed for the molecular precursor [Cr(Osi(O^{t}Bu)₃)₂]₂ (1) indicating that the coordination environment must be similar on the silica grafted material. Overall, these data are in agreement with a Cr-siloxide dimer on the silica surface, which will be referred to as [(=SiO)Cr₂(Osi(O^{t}Bu)₃)₃] **(2).**

Thermal treatment of[(= SiO)Cr₂(OSi(O^{t}Bu)₃)₃] **(2)** at 300 °C for 1h and at 400 °C for 3h under high vacuum (10⁻⁵ mbar) triggers a surface rearrangement due to the elimination of isobutylene, water, and ^{t}BuOH to yield a blue solid, i.e. [(=SiO)₄Cr₂] (3). Analysis of the volatile products gave 3.6 equiv of isobutylene and 1.1 equiv ^{t}BuOH per surface Cr. Infrared spectroscopy of this material lacked v_{CH} vibrations but contained new hydrogen-bonded silanol vibrations.

Exposure of [(=SiO)₄Cr₂] **(3)** to excess CO resulted in a single v_{CO} band at 2189 cm⁻¹, which implies that a narrow distribution of surface chromium species is present. This particular vibration has been observed for the reduced Cr/SiO₂ Phillips catalyst upon CO exposure, though in this case multiple other vibrations were also observed, because of the inhomogeneous Cr environment present in Phillips catalyst. The DRUV-Vis spectrum of [(=SiO)₄Cr₂] **(3)** also contains a broad absorption band at 410 nm, identical to [Cr(OSi(O^{t}Bu)₃)₂]₂ **(1)** and [(=SiO)Cr₂(OSi(O^{t}Bu)₃)₃] **(2).**

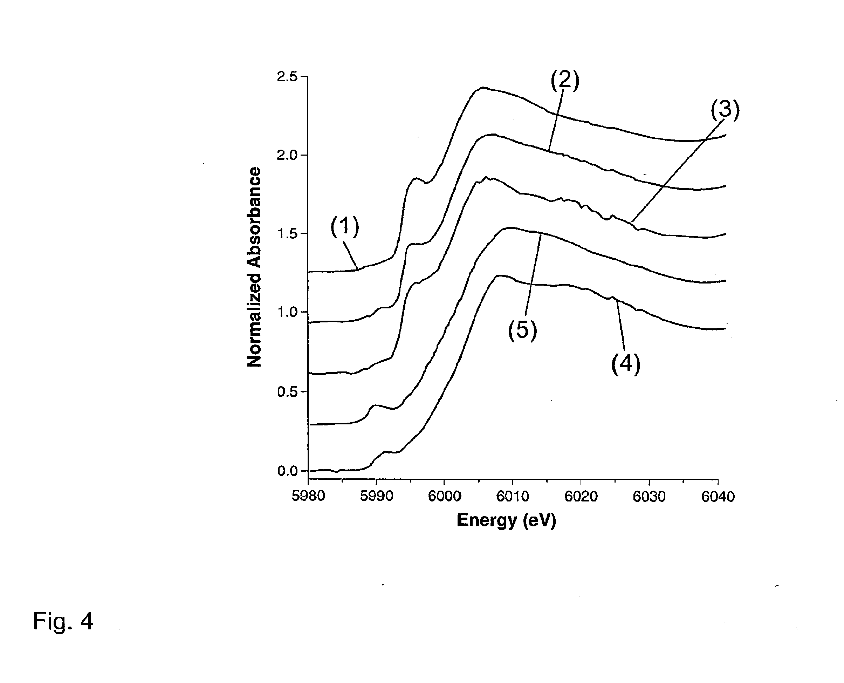

To gain deeper insight into the structure and oxidation state of the grafted species [(=SiO)₄Cr₂] **(3)** XAS experiments were conducted at the Cr K-edge. The X-ray Absorption Near Edge Spectroscopy (XANES) spectra for molecular precursor compound [Cr(OSi(O^{t}Bu)₃)₂]₂ **(1),** and chromium on silica precursors [(=SiO)Cr₂(OSi(O^{t}Bu)₃)₃] **(2),** and [(=SiO)₄Cr₂] **(3)** are shown in Figure 4. The XANES of molecular species **(1),** which contains Cr(II) centers, has a strong shoulder close to 5993.6 eV and no intense pre-edge features. [(=SiO)Cr₂(OSi(O^{t}Bu)₃)₃] **(2)** has almost identical XANES characteristics as **(1).** The XANES of [(=SiO)₄Cr₂] **(3)** is also very similar to **(1),** though with a slight decrease in the intensity of the 5993.6 eV shoulder. This data indicates that the oxidation state and the local geometric structure of chromium in [(=SiO)Cr₂(OSi(O^{t}Bu)₃)₃] **(2),** and [(=SiO)₄Cr₂] **(3)** is very similar to the molecular precursor (1).

The results of the Extended X-ray Absorption Fine Structure (EXAFS) analysis of **(1),** [(≡SiO)Cr₂(OSi(O^{t}Bu)₃)₃] **(2),** and [(≡SiO)₄Cr₂] **(3)** are summarized in Table 1. The Cr-O, Cr-Si, and Cr-Cr scattering paths used in the model applied correspond to the nearest oxygen, chromium, and silicon neighbours present in the µ2-disiloxydicromium core of the known structure of molecular precursor **(1).** Importantly, to obtain high quality fits for all structures it was necessary to include a Cr scatter. To reduce the number of variables, oxygen scattering paths corresponding to average Cr-O distance in each structure were used. For [Cr(OSi(O^{t}Bu)₃)₂]₂ **(1)** such a fit was compared with the fit obtained using four independent oxygen scattering paths corresponding to the crystal structure. The quality of both fits was statistically similar. The average interatomic distances obtained by EXAFS analysis for [Cr(OSi(O^{t}Bu)₃)₂]₂ **(1),** [(≡SiO)Cr₂(OSi(O^{t}Bu)₃)₃] **(2),** and [(=SiO)₄Cr₂] **(3)** are similar to each other confirming that [(≡SiO)Cr₂(OSi(O^{t}Bu)₃)₃] **(2)** and [(≡SiO)₄Cr₂] **(3)** preserve the dimeric structure of molecular precursor **(1).**

**Table 1. EXAFS fit parameters for [Cr(OSi(O^{t}Bu)₃)₃]₂ (1), [(=SiO)Cr₂(OSi(O^{t}Bu)₃)₃] (2), [(=SiO)₄Cr₂] (3), C₄₈H₁₀₈Cr₂O₁₇Si₄ (5), and [(=SiO)₆Cr₂] (4).**

| Sample | Neighbor | *N*^{a} | r (Å)^{b} | ΔE₀ (eV)^{c} | σ² (Å²)^{d} |
|---|---|---|---|---|---|
| [Cr(OSi(O^{t}Bu)₃)₃]₂ (1) | O | 4 | 2.03 | 1.20(48) | 0.013(1) |
| | Si | 1 | 2.77 | -3.06(1.75) | 0.0058(23) |
| | Cr | 1 | 2.89 | -2.40(1.41) | 0.0045(12) |
| [(=SiO)Cr₂(OSi(O^{t}Bu)₃)₃] (2) | O | 4 | 1.98(1) | 1.20 | 0.0093(11) |
| | Si | 1 | 2.73(3) | -3.06 | 0.0058 |
| | Cr | 1 | 2.93(2) | -2.40 | 0.0045 |
| [(≡SiO)₄Cr₂] (3) | O | 4 | 2.00(1) | 1.20 | 0.0072(8) |
| | Si | 1 | 2.66(2) | -3.06 | 0.0056(29) |
| | Cr | 1 | 2.98(2) | -2.40 | 0.0045(19) |
| (5) | O | 5 | 1.96(1) | -1.33(34) | 0.016(1) |
| | Si | 1 | 2.59(1) | -8.42(75) | 0.0071(18) |
| | Cr | 1 | 2.96 | -8.42(75) | 0.0042(10) |
| [(≡SiO)₆Cr₂] (4) | O | 5 | 2.00(1) | 1.20 | 0.012(1) |
| | Si | 1 | 2.69(1) | -3.06 | 0.0098(43) |
| | Cr | 1 | 3.01(1) | -2.40 | 0.0052(19) |

| | | | | | |
|---|---|---|---|---|---|
| ^{a} - Number of neighbors ^{b} - Distance between Cr and neighbor ^{c} - Energy shift ^{d} - Debye-Waller factor | | | | | |

The inventors anticipated that [(≡SiO)₄Cr₂] **(3)** would initiate ethylene polymerization because this material contains "ligandless" Cr(II) sites on silica. However, contacting [(≡SiO)₄Cr₂] with ethylene resulted in minimal consumption at 25 °C and only minor appearance of v_{CH} vibrations on the silica surface by IR spectroscopy. This result was surprising due to the wealth of literature that has implicated Cr(II) as the active site during polymerization catalysis. In fact, only minimal polymerization activity was observed when [(≡SiO)₄Cr₂] was heated to 70 °C over 4 h.

Recent reports have shown that N₂O treatment of the reduced Phillip's catalyst results in high ethylene polymerization activity that was attributed to Cr(lV) *(58).* In the scope of the present invention, [(=SiO)₄Cr₂] **(3)** was treated with excess N₂O at 100 °C for 1h. During N₂O exposure the blue color of [(=SiO)₄Cr₂] faded to give a purple solid **(4).** The DRUV-Vis spectrum of **(4)** lacks the characteristic absorption found for **(1),** [(= SiO)Cr₂(OSi(O^{t}Bu)₃)₃] **(2),** and [(=SiO)₄Cr₂] (3). The Cr K-edge XANES of **(4)** (see Figure 4) does not contain the prominent shoulder at 5993.6 eV that was present in the XANES spectra of **(1),** [(=SiO)Cr₂(OSi(O^{t}Bu)₃)₃] **(2),** and [(=SiO)₄Cr₂] **(3).** Also the absorption edge is shifted to higher energy relative to the Cr(II) species and a pre-edge feature at 5990-5992 eV appeared. The DRUV-Vis and XANES data are consistent with major changes in the chromium coordination environment and the formation of a higher oxidation state Cr-species. Contacting this material with CO results in the appearance of two v_{CO} stretches at 2191 cm⁻¹ and 2205 cm⁻¹ in the IR spectrum, slightly blue shifted relative to the CO bands in [(=SiO)₄Cr₂], in roughly 1.5:1 ratio. Exposure of this solid to ethylene at 25 °C resulted in the rapid saturation of the v_{CH} region by IR spectroscopy and formation of a white film on the pellet, indicating ethylene polymerization.

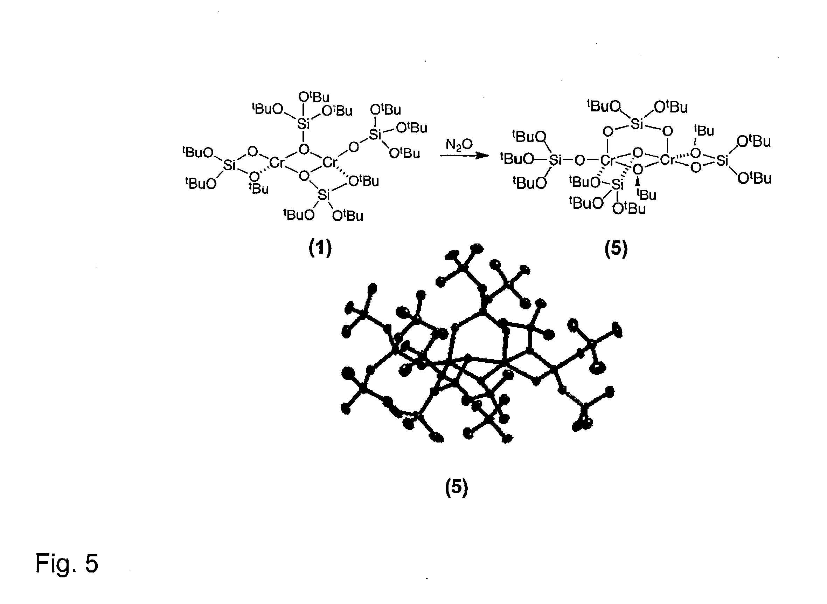

Though the XANES spectrum showed that N₂O oxidizes [(=SiO)₄Cr₂] **(3),** proposing a molecular structure for **(4)** was not easy because such structure was not obvious. By exposing compound **(1)** to N₂O at 25 °C for 16 h, purple single crystals were obtained, and the X-Ray structural analysis revealed the presence of the Cr(III) dimer **(5),** shown in Figure 5. The five-coordinate Cr(III) centers fall between square pyramidal and trigonal bipyramidyl, which is typical of five-coordinate metal species. The Cr-Cr distance in **(5)** is 2.966(1), slightly longer than for **(1).**

The Cr K-edge XANES spectrum of the Cr(III) dimer **(5)** shows similar edge and pre-edge features as the N₂O oxidized material **(4).** The results indicate that the chromium centers are in the +3 oxidation state and have a similar coordination geometry as the Cr(III) dimer **(5)** thereby supporting for **(4)** the structure [(≡SiO)₆Cr₂]. The results of the EXAFS analysis for **(5)** and [(≡SiO)₆Cr₂] are also compiled in Table 1. Both of these species must contain a Cr-Cr scattering path to obtain reasonable quality EXAFS fits. The average Cr-O, Cr-Si, and Cr-Cr distances in the first and second coordination shells for **(5)** and [(≡SiO)₆Cr₂] **(4)** are similar and in good agreement with the crystallographically obtained distances from **(5).** These results strongly support that [(≡SiO)₆Cr₂] **(4)** has a dimeric structure similar to **(5).**

The Cr K-edge XANES spectrum of Cr(OSi(OtBu)₃)₃*2thf, the grafted species [(≡SiO)Cr(OSi(O^{t}Bu)₃)₂(thf)] and the thermally treated species [(≡SiO)₃Cr] show all similar edge features. This result suggests that the oxidation state +3 is retained in all three species.

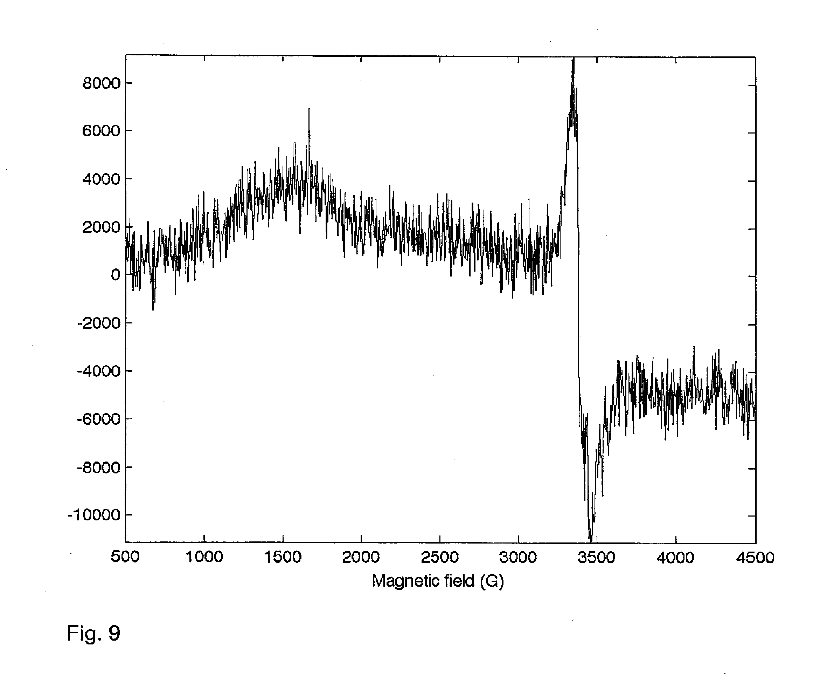

The polymerization activity of these materials was monitored in a glass-reactor equipped with an IR cell. In order to accurately determine the polymerization activities Sylopol-948, an amorphous silica support composed of very small particles that can fragment when polymer is formed avoiding mass transfer limitations, was used as a support for the chromium dimers. For each experiment a glass reactor was charged with catalyst and preheated to 70 °C before ethylene (*ca.* 300 mbar) was introduced. The decay of ethylene was monitored by IR spectroscopy. [(≡SiO)₆Cr₂] **(4)** had initial ethylene polymerization activity of 19 kg PE (mol Cr*h)⁻¹, a value close to the productivity typically reported for Phillips catalyst.(*17*) In contrast, [(≡SiO)₄Cr₂] **(3)** had initial polymerization activity of 1.6 kg PE (mol Cr*h)⁻¹, an activity that is one order of magnitude less than Phillips catalyst and [(≡SiO)₆Cr₂] **(4).** The activity found for **(3)** may arise from the oxidation of only a few Cr(II) sites. The mononuclear species [(≡SiO)₃Cr] displayed under the same conditions an initial polymerization activity of 11 kg PE (mol Cr*h)⁻¹ and the catalyst prepared from Cr(IV) molecular precursor (see Figure 1) and containing Cr(III) from the EPR spectrum (see Figure 9) also gave polymer. The polymerization kinetics of the CO reduced Phillips catalyst was also measured at the same chromium loading and under similar conditions, and an activity of 1.6 kg PE (mol Cr*h)⁻¹ was found. This low activity likely arised from the low ethylene pressure used in this experiment by comparison with industrial conditions. In fact, at higher ethylene pressure (6 bar) in a fixed bed reactor at 70 °C under gas phase polymerization conditions, the activity of the Phillips catalyst increased to 54 kg PE (mol Cr*h)⁻¹. Under identical conditions [(=SiO)₆Cr₂] **(4)** displayed a higher polymerization activity of 107 kg PE (mol Cr*h)⁻¹. High temperature size exclusion chromatography of the PE produced with [(≡SiO)₆Cr₂] under high pressure conditions gave a number average molecular weight of *Mn* = 5500 g *MwlMn* and a weight average molecular weight of *Mw* = 52000 g mol⁻¹ and a dispersity D = *MwlMn* of 9.4; values very close to those obtained for the PE obtained from the CO reduced Phillips catalyst under the same conditions (*Mn* = 6600 g mol⁻¹, *Mw* = 52600 g mol⁻¹, D = 8.0), indicating a similarity between the active sites. Under identical conditions at higher ethylene pressure the mononuclear species [(≡SiO)₃Cr] displayed a polymerization activity of 121 kg PE (mol Cr*h)⁻¹. Compared to [(≡SiO)₆Cr₂] the polymer produced by [(≡SiO)₃Cr] gave higher molecular weights and polydispersity *(Mn* = 8000 g mol⁻¹, *Mw* = 105000 g mol⁻¹ and D *= Mw*/*Mn* of 13.1). This change of polymer properties indicates the tenability of these catalysts.

### Experimental Part

### I. General Information.

All experiments related to surface-modifications were carried out under inert atmosphere using glovebox (Ar), Schlenk (Ar), or high vacuum (10-5 mbar) techniques. [SiO₂₋₇₀₀] was prepared by calcining Aerosil-200 or Sylopol-948 at 500 °C (5 °C/min) under air for 4h, exposed to high vacuum at the same temperature for 12h, and heated to 700 °C (5 °C/min) for 4 h under vacuum. Pentane was dried by passage through two columns of activated alumina and degassed prior to use. Tetrahydrofuran (thf) was distilled from purple Na/benzophenone under Ar and stored over activated molecular sieves.

Hexamethyldisiloxane (HMDSO) was distilled from CaH₂ under Ar and stored over molecular sieves. C₆D₆ was vacuum distilled from purple Na/benzophenone. NaHMDS was synthesized from HMDS and NaH in refluxing toluene. HOSi(OtBu)₃ was obtained from Sigma-Aldrich and used as received. N₂O was passed through activated 4A molecular sieves prior to use. Ethylene was passed through activated 4A molecular sieves and BASF Cucatalyst to remove oxygen and water prior to use. Gas chromatography was performed on an Agilent 7980A GC with flame ionization detection. Transmission infrared spectra were recorded on a Bruker Alpha FT-IR spectrometer. Elemental analyses were performed by the Mikroanalytisches Labor Pascher; Remagen, Germany.

### II. Synthesis and Characterization of New Materials

### Example 1: Synthesis of Cr(HMDS)₂*2thf

The title compound has been previously characterized,(52) though the synthetic procedure was not fully described. CrCl₂ (3.2 g, 26 mmol) was suspended in thf (75 mL). A thf (75 mL) solution of NaHMDS (9.1 g, 49.7 mmol) was added by cannula to the CrCl₂ suspension at 25 °C. The green slurry became purple with a precipitate. The suspension was stirred at 25 °C for two hours and filtered through a pad of celite. The clear purple thf solution was concentrated by approximately 10 % and placed at -20 °C. Large purple crystals were present after *ca.* 18h at -20 °C, which were isolated by filtration to give Cr(HMDS)₂*2thf(5.48 g, 10.6 mmol, 41 % yield). ¹H NMR (400 MHz, C₆D₆) δ 39.0 (8H, v_{1/2} *ca.* 1100 Hz), 31.8 (36H, v_{1/2}= 800 Hz), 0.4 (8H, v_{1/2}= 300 Hz).

### Example 2: Synthesis of [Cr(OSi(O^{t}Bu)₃)₂]₂ (1)

Cr(HMDS)2*2thf (6.0 g, 11.6 mmol) was slurried in pentane (50 mL) at 25 °C. A pentane (50 mL) solution containing HOSi(O^{t}Bu)₃ (6.13 g, 23.2 mmol) was added by cannula at 25 °C. The slurry slowly homogenized to form a clear deep blue solution. After 18 h at 25 °C the solvent was removed, and the flask was connected to a high vacuum line (10⁻⁵ mbar) and heated at 50 °C for 2h to remove any unreacted HOSi(O^{t}Bu)₃. The blue solid was extracted into HMDSO (50 mL), filtered, concentrated by about one-fourth, and stored at -20 °C. [Cr(OSi(O^{t}Bu)₃)₂]₂ was isolated as large blue X-Ray quality crystals in multiple crops (4.2 g, 3.6 mmol, 62 % yield). ¹H NMR (400 MHz, C₆D₆) δ □2.22 (v_{1/2}= 730 Hz). Elemental Analysis: Expected 49.80 % C, 9.40 % H; Found 49.73 % C, 9.27 % H.

### Example 3: Synthesis of C₄₈H₁₀₈Cr₂O₁₇Si₄ (5)

[Cr(OSi(O^{t}Bu)₃)₂]₂ (0.20 g, 0.17 mmol) was dissolved in HMDSO (2 mL) and degassed at 77K in a 50 mL Schlenk flask. The solution was thawed at 25 °C and exposed to N₂O (650 mbar) The solution was maintained at 25 °C overnight to yield a deep purple solution. Concentration of the HMDSO by half, and storage at -40 °C resulted in X-Ray quality crystals of (5) (0.12 g, 0.10 mmol, 60 %). ¹H NMR (400 MHz, C₆D₆) δ 1.89 (v_{1/2} = 540 Hz).

### Example 4: Synthesis of [(≡SiO)Cr₂(OSi(O^{t}Bu)₃)₃]

[SiO₂₋₇₀₀] (1.40 g, 0.36 mmol SiOH) was suspended in a blue C₆H₆ (8 mL) solution containing [Cr(OSi(O^{t}Bu)₃)₂]₂ (0.504 g, 1.25 equiv) at 25 °C in an Ar filled glovebox. The slurry was maintained at this temperature for 3h, then filtered and washed with C₆H₆ (1 x 6 mL, 1 x 4 mL) and pentane (1 x 10 mL) to yield the blue [(≡SiO)Cr₂(OSi(O^{t}Bu)₃)₃] material. The combined C₆H₆ washings contained 0.23 mmol of HOSi(O^{t}Bu)₃ that was quantified by ¹H NMR with Cp₂Fe internal standard. Elemental analysis: 6.70 % C; 1.20 % H; 1.60 % Cr.

### Example 5: Synthesis of [(≡SiO)₄Cr₂]

[(≡SiO)Cr₂(OSi(O^{t}Bu)₃)₃] (2) (1.0 g) was loaded into a reactor and placed under high vacuum (10 -5 mbar) and heated to 300 °C (5 °C/min) for 1h and at 400 °C (5 °C/min) for 3h. The reactor was cooled to ambient temperature under vacuum, and [(≡SiO)₄Cr₂] was stored in an Ar filled glovebox. The volatiles liberated during this process were quantified by 1H NMR in C₆D₆ with Cp₂Fe as an internal standard; 3.6 equiv of isobutylene and 1.1 equiv of^{t}BuOH per surface Cr-dimer were found. Elemental analysis: 1.50 % Cr.

### Example 6: Synthesis of [(≡SiO)₆Cr₂]

[(≡SiO)₄Cr₂] (0.40 g) was loaded into a 500 mL reactor and placed under high vacuum (10⁻⁵ mbar) and treated with N₂O (80 mbar). The reactor was heated to 100 °C for 1h, and then evacuated. Elemental analysis: 1.71 % Cr.

### Example 7: Synthesis of Cr(OSi(OtBu)₃)₃*2thf (67)

CrCl₃(thf)₃ (3.84 g, 10.3 mmol) and NaOSi(O^{t}Bu)₃ (8.81 g, 3 equiv) were dissolved in 250 mL thf in a rotaflo giving a turquoise solution. The mixture was freeze-pump-thawed to degas and heated to 70 °C overnight. The mixture was cooled to RT, concentrated and dried in vacuo. After addition of pentane, the mixture was filtered over Celite and washed with pentane giving a dark blue filtrate. The product was crystallized at -4 °C to give blueish green crystals (3.42 g, 3.47 mmol) in 34 % yield. ¹H NMR (250 MHz, C₆D₆): δ 2.08 (b).

### Example 8: Synthesis of [(≡SiO)Cr(OSi(O^{t}Bu)₃)₂(thf)]

[SiO₂₋₇₀₀] (1.00 g, 0.26 mmol SiOH) was suspended in a blue C₆H₆ (13 mL) solution containing Cr(OSi(OtBu)₃)₃*2thf (0.265 g, 1.03 equiv) at 25 °C in an Ar filled glovebox. The slurry was maintained at this temperature for 3h, then filtered and washed with C₆H₆ (3 x 4 mL) and pentane (1 x 5 mL) to yield the blue [(≡SiO)Cr(OSi(O^{t}Bu)₃)₂(thf)] material. The combined C₆H₆ washings contained 0.10 mmol of HOSi(O^{t}Bu)₃ that was quantified by ¹H NMR with Cp₂Fe internal standard.

### Example 9: Synthesis of [(≡SiO)₃Cr]

[(≡SiO)Cr(OSi(O^{t}Bu)₃)₂(thf)] (0.4 g) was loaded into a reactor and placed under high vacuum (10⁻⁵ mbar) and heated to 300 °C (5 °C/min) for 1h and at 400 °C (5 °C/min) for 3h. The reactor was cooled to ambient temperature under vacuum, and [(≡SiO)₃Cr] was stored in an Ar filled glovebox. The volatiles liberated during this process were quantified by ¹H NMR in C₆D₆ with Cp₂Fe as an internal standard; 6.6 equiv of isobutylene, 0.2 equiv of ^{t}BuOH and 1 equiv of thf per surface Cr-dimer were found.

### Example 10: Synthesis of Cr(OtBu)₄ (68)

To a solution of CrCl₃(THF)₃ (3.90 g, 10.4 mmol, 1 equiv) in THF, KO^{t}Bu (4.68 g, 41.7 mmol, 4 equiv) in THF was added, giving a blueish solution. CuCl (1.11 g, 11.2 mmol, 1 equiv) was added and the mixture was stirred overnight. A red-brown precipitate was removed from the blue solution by Schlenk filtration. THF was removed in vacuo and the remaining solid was distilled on the high-vacuum line by heating it gently with a heatgun, giving the blue Cr(OtBu)₄ in 10.5 % yield (0.38 g, 1.1 mmol). ¹H NMR (C₆D₆, 250 MHz): δ 3.12 (b).

### Example 11: Synthesis of [(≡SiO)₃Cr] from Cr(OtBu)₄

SiO₂₋₍₇₀₀₎ (1.00 g, 0.26 mmol surface SiOH) and Cr(O^{t}Bu)₄ (108 mg, 0.31 mmol, 1.2 equiv) dissolved in a few mL of benzene were stirred for 3 h at RT in a double-Schlenk. Filtration and washing with benzene until the washings were colorless yielded a deep blue colored silica. To the washings, ferrocene (37.9 mg, 0.2 mmol) was added for a mass balance analysis by ¹H-NMR. Quantification of the signals assigned to ferrocene and tert-butanol showed, that 0.17 mmol of ^{t}BuOH was released. This corresponds to the formation of 0.67 equiv of ^{t}BuOH per surface silanol or 0.55 equiv of ^{t}BuOH per chromium used. The obtained material was washed with pentane and dried on high-vacuum yielding a blue material (1.05 g).

The blue material (202.7 mg, 0.03 mmol Cr) was thermally decomposed (ramp to 300 °C in 1 h, 300 °C for 1 h, ramp up to 400 °C in 20 min, 400 °C for 3 h) while trapping all volatiles. A color change from deep blue to a dark greyish blue was observed. The volatiles were analyzed by GC and by ¹H NMR with ferrocene (9.9 mg, 0.05 mmol) as internal standard for a mass balance. Quantification of the signals assigned to ferrocene, isobutylene and tert- butanol respectively showed, that 3.7 equiv of isobutylene and 0.5 equiv of ^{t}BuOH was released per chromium grafted. From this procedure [(≡SiO)₃Cr] (170 mg) was obtained.

### III. Analytical Procedures

### 1. Crystal structure determination

### Crystal structure determination of [Cr(OSi(O^{t}Bu)₃)₂]₂ (1)

Single crystals of C₄₈H₁₀₈Cr₂O₁₆Si₄ [Cr(OSi(O^{t}Bu)₃)₂]₂ were grown overnight from a concentrated solution of HMDSO at -40 °C. A suitable crystal was selected and mounted on paratone on a APEX 2 diffractometer. The crystal was kept at 100 K during data collection. Using Olex2,(*59*) the structure was solved with the XS (*60*) structure solution program using Direct Methods and refined with the XL (*61*) refinement package using Least Squares minimisation.

*Crystal Data.* C₄₈H₁₀₈Cr₂O₁₆Si₄, *M* =1157.70, triclinic, *a* = 12.969(3) Å, *b* = 24.042(5) A, *c* = 24.143(5) A, *α* = 61.846(3)°, *β* = 89.138(4)°, *γ* = 89.968(3)°, *V =* 6636(2) Å3, *T =* 100, space group P-1 (no. 2), *Z* = 4, µ(MoKα) = 0.454, 102651 reflections measured, 19561 unique (*R*ᵢₙₜ = 0.0534) which were used in all calculations. The final *wR*₂ was 0.1852 (all data) and *R*ₗ was 0.0649 (>2sigma(I)).

### Crystal structure determination of C₄₈H₁₀₈Cr₂O₁₇Si₄ (5)

Single crystals of C₄₈H₁₀₈Cr₂O₁₇Si₄, (*5*) were grown overnight from a concentrated solution of HMDSO at -40 °C. A suitable crystal was selected and mounted on paratone on a APEX 2 diffractometer. The crystal was kept at 100 K during data collection. Using Olex2, (*2*) the structure was solved with the XS (*3*) structure solution program using Direct Methods and refined with the XL (*4*) refinement package using Least Squares minimisation.

*Crystal Data.* C₄₈H₁₀₈Cr₂O₁₇Si₄, *M* =2672.18, triclinic, *a* = 12.148(3) Å, *b* = 17.487(4) A, *c* = 19.241(5) A, *α* = 72.157(3)°, *β* = 86.825(4)°, *γ* = 82.690(4)°, *V* = 3858.6(16) Å3, *T =* 100, space group P-1 (no. 2), *Z*=1, µ(MoKα) = 0.430, 52788 reflections measured, 20585 unique (*R*ᵢₙₜ = 0.0763) which were used in all calculations. The final *wR*₂ was 0.1817 (all data) and *R*ₗ was 0.0658 (>2sigma(I)).

### 2. X-Ray Absorption Spectroscopy (XAS)

X-ray absorption spectroscopy (XAS) measurements at Cr K-edge were performed at the SuperXAS beamline at the Swiss Light Source (Paul Scherrer Institute, Villigen, Switzerland). The SLS is a third generation synchrotron, which operates under top up mode, 2.4 GeV electron energy, and a current of 400 mA. The SuperXAS beamline is positioned on one of three super-bent ports. The incident beam was collimated by Si-coated mirror at 2.8 mrad, monochromatized using a double crystal Si(111) monochromator, and focused with Rh 5 coated toroidal mirror (at 2.8 mrad) down to 100x100 µm. The beam intensity was of 4-5*10¹¹ ph/s. The beamline energy ws calibrated using Cr reference foil (Cr K-edge position at 5989.0 cV). Ion chambers filled with He-N₂ gas mixtures were used for XAS detection in transmission mode and Silicon drift Ketek detector to measure fluorescence. To avoid contact with air all samples were sealed in a glovebox. Each pellet of samples (with optimized thickness for transmission detection) was placed in two aluminized plastic bags (Polyaniline (15 µm), polyethylene (15µm), Al (12µm), polyethylene (75µm) from Gruber-Folien GmbH & Co. KG) using an impulse sealer inside a glovebox; one sealing layer was removed just before the measurements. Powder samples for fluorescence detection were sealed in quartz capillaries (0.01 mm wall thickness, 0.9mm outer diameter, Hilgenberg GmbH) in a glovebox using vacuum grease (Apiezon Products) and wax, and stored in sealed glass tubes under argon that were opened just before the measurements.

XANES data were collected in transmission mode at 298 K. Several scans using fast shutter, short acquisition time and reduced beam intensity were performed to be sure that X-ray beam damage did not take place. EXAFS data in fluorescence mode were acquired for **(1),** [(≡SiO)Cr₂(OSi(O^{t}Bu)₃)₃] (2), [(≡SiO)₄Cr₂] (3), and [(≡SiO)₆Cr₂] (4) at 100 K, and in transmission mode for **(5)** at 298 K. XANES data for all compounds is measured at 298 K in transmission mode to minimize self absorption effects. EXAFS data was taken from 5900-6800 eV, with a scan time of approximately 30 minutes, multiple scans performed on fresh spots (to avoid the beam damage) were averaged to reduce the noise. XANES and EXAFS data were analysed using the Ifeffit program package.(*62*) The EXAFS data was fitted in R-space (1.0-3.2 A) after a Fourier transform (k=1.5-11 Å⁻¹) using a k-weight of 2.

### EXAFS Fitting

The X-Ray crystal structures of **(1)** contains a first coordination shells with four different Cr-oxygen bonds lengths. The EXAFS of **(1)** were fit using two approaches. First, the EXAFS data for **(1)** were fits with four unique oxygen scattering paths with distances close to those obtained from the X-Ray crystal structure. Second, the data for **(1)** were fit to a single average Cr-O scattering path with *N* = 4. A fit was obtained that was statistically identical (in terms of the reduced χ² value) to the first fit.

If the presence or absence of a Cr-Cr scatter has an effect on the quality of the EXAFS fits (in terms of the reduced χ² value) was also investigaed. Fits for **(1)** with average Cr-O scatters (CN = 4) with or without Cr-Cr scatters were optimized. The results are given in Table S4 in entries 1 and 2, and shown for k- and R-space in Figure SXa. The reduced χ² value found was 172 with a Cr-Cr scatter and 478 without a Cr-Cr scatter. Clearly the fit was worse without a Cr-Cr scatter. This increase in the reduced χ² value was found in all dimeric molecular presursors and the materials obtained by using dimeric molecular precursors..

### UV-Vis

UV-Vis spectra were collected on Agilent Technologies, Cary Series UV-Vis-NIR Spectrophotometer in DRIFT mode. The measurements were taken from 200 nm to 1100 nm at a scanning rate of 50 nm/min.

### EPR

EPR (Electron paramagnetic resonance spectroscopy) is a good way to check the catalyst.
X-band EPR spectra (9.5 GHz) were measured at RT and at 110 K with a centre field of 2500 G with bandwidth 4000 G and with 8 mW or 32 mW and modulation amplitudes of 1 or 5 G.

### IR spectroscopy of absorbed CO

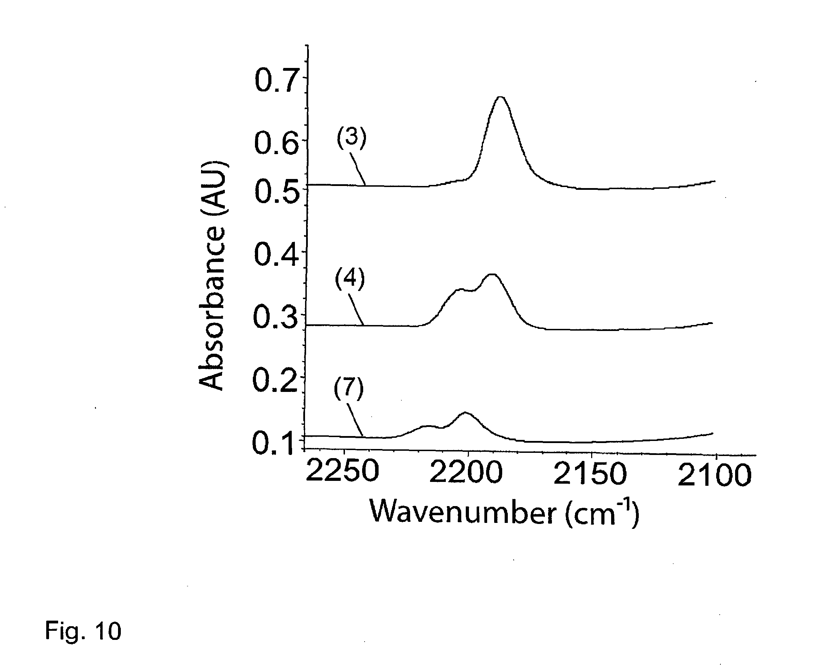

Infrared of adsorbed CO is a good method to check the catalyst. IR spectra were recorded at room temperature on each material presented in Figure 10 on self-supporting disks (ca. 10 mg) that were exposed to 10 mbar of CO.

### IV. Ethylene Polymerization

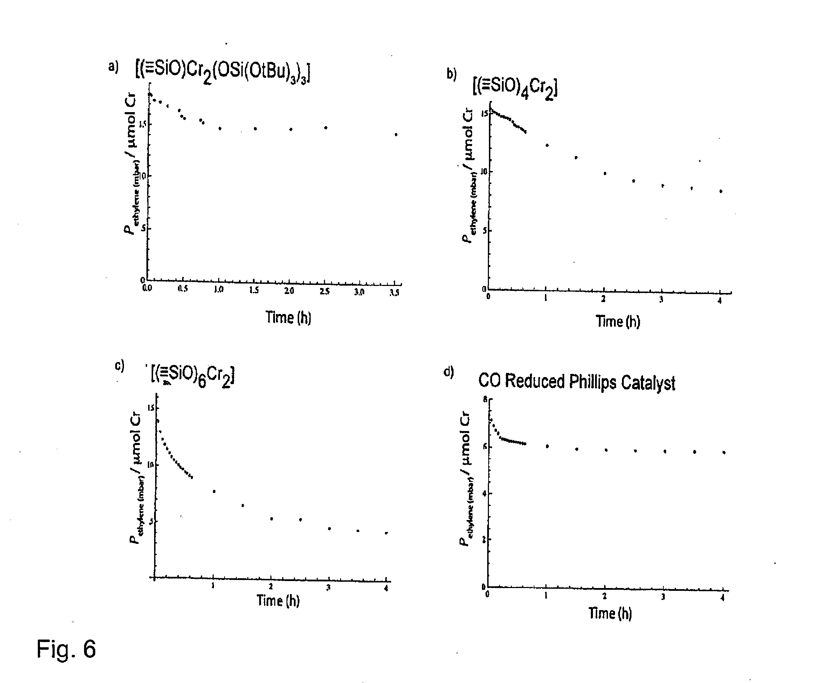

A 500 mL glass reactor capped with a CaF₂ window for transmission infrared measurements and a side-arm that was attached to a Teflon capped flask containing the chromium catalyst supported on Sylopol-948 silica (40 mg, 48 µmol Cr) was loaded in an Ar filled glovebox. The inert atmosphere was removed and replaced with ethylene (*ca.* 300 mbar). The Teflon capped flask containing the Cr catalyst was preheated to 70 °C for 5 min and then exposed to the ethylene atmosphere; this was taken as t = 0. Infrared spectra were acquired every 2 min, and the intensity of the band at 2987 cm⁻¹ was used to determine the pressure of ethylene at a given time. Plots of ethylene pressure vs. time, and the ethylene polymerization activity are shown in Figure 6.

### High Pressure Ethylene Polymerization

The chromium catalyst (100 mg, 120 µmol Cr) was mixed with NaCl (ca 2 g, average particle size: 50 µm) in a glovebox and loaded into a fixed bed reactor that has been described previously.(*63*) The apparatus was preheated at 70 °C under a flow of Ar until the internal temperature stabilized, and a mixture of ethylene (6 bar) and He (3 bar) was passed through the fixed bed reactor for 75 sec. Short reaction times were used to ensure accurate measurement of the polymerization activity under controlled temperature conditions. The polyethylene was recovered by filtration after dissolution of the mixture in water to remove NaCl. The activity data for [(≡SiO)₆Cr₂] and CO reduced Phillips catalyst, both supported on Sylopol, are given in Table 2.

**Table 2 High ethylene pressure polymerization activity for [(≡SiO)₆Cr₂] and CO reduced Phillips catalyst and [(≡SiO)₃Cr] supported on Sylopol.**

| Catalyst | Activity [kg PE / mol Cr] | *M_{w}* | *Mₙ* | *M_{w}*/*Mₙ* |
|---|---|---|---|---|
| CO reduced Phillips | 54 | 52600 | 6600 | 8.0 |
| [(≡SiO)₆Cr2] | 107 | 52000 | 5500 | 9.4 |
| [(≡SiO)₃Cr] | 121 | 105000 | 8000 | 13.1 |

### Characterization of PE produced at higher ethylene pressure High temperature SEC (HT-SEC)

High-temperature size exclusion chromatography (HT-SEC) measurements were performed using a Viscotek High Temperature Triple Detection GPC (HT-GPC) system that incorporated a differential refractive index, a viscometer, and a light scattering detector. 1,2,4-Trichlorobenzene (TCB) was used as the mobile phase at a flow rate of 1 mL min⁻¹. TCB was stabilized with 2,6-di(tert-butyl)-4-methylphenol. All polymers were injected at a concentration of 5 mg mL⁻¹.The separation was carried out on three mixed bed columns (300x7.8 mm from Malvern Instrument) and a guard column (75x7.5 mm). Columns and detectors were maintained at 150°C. The Omnisec software was used for data acquisition and data analysis. The molar masses were measured using the triple detection. The molecular weights are listed in Table 2.

While there are shown and described presently preferred embodiments of the invention, it is to be distinctly understood that the invention is not limited thereto but may be otherwise variously embodied and practiced within the scope of the following claims.

### Literature

1. J. Brandsch, O. Piringer, in Plastic Packaging. (Wiley-VCH Verlag GmbH & Co. KGaA, 2008), pp. 15-61.
2. T. E. Nowlin, R. I. Mink, Y. V. Kissin, in Handbook of Transition Metal Polymerization Catalysts. (John Wiley & Sons, Inc., 2010), pp. 131-155.
3. L. Wu, S. E. Wanke, in Handbook of Transition Metal Polymerization Catalysts. (John Wiley & Sons, Inc., 2010), pp. 231-259.
4. R. F. Jordan, C. S. Bajgur, R. Willett, B. Scott, ETHYLENE POLYMERIZATION BY A CATIONIC DICYCLOPENTADIENYLZIRCONIUM(IV) ALKYL COMPLEX. Journal of the American Chemical Society 108, 7410 (Nov, 1986).
5. R. F. Jordan, CHEMISTRY OF CATIONIC DICYCLOPENTADIENYL GROUP-4 METAL ALKYL COMPLEXES. Adv. Organomet. Chem. 32, 325 (1991).
6. A. Togni, R. L. Halterman, Metallocenes. A. Togni, R. L. Halterman, Eds., (Wiley-VCH, Weinheim, Germany, 1998).
7. W. Kaminsky, Highly active metallocene catalysts for olefin polymerization. J. Chem. Soc., Dalton Trans., 1413 (May, 1998).
8. D. J. Arriola, E. M. Carnahan, P. D. Hustad, R. L. Kuhlman, T. T. Wenzel, Catalytic Production of Olefin Block Copolymers via Chain Shuttling Polymerization. Science 312, 714 (May 5, 2006, 2006).
9. T. R. Younkin et al., Neutral, Single-Component Nickel (II) Polyolefin Catalysts That Tolerate Heteroatoms. Science 287, 460 (January 21, 2000, 2000).
10. L. K. Johnson, C. M. Killian, M. Brookhart, New Pd(II)- and Ni(II)-Based Catalysts for Polymerization of Ethylene and .alpha.-Olefins. Journal of the American Chemical Society 117, 6414 (1995/06/01, 1995).
11. M. R. Radlauer, A. K. Buckley, L. M. Henling, T. Agapie, Bimetallic Coordination Insertion Polymerization of Unprotected Polar Monomers: Copolymerization of Amino Olefins and Ethylene by Dinickel Bisphenoxyiminato Catalysts. Journal of the American Chemical Society 135, 3784 (2013/03/13, 2013).
12. Z. Guan, P. M. Cotts, E. F. McCord, S. J. McLain, Chain Walking: A New Strategy to Control Polymer Topology. Science 283, 2059 (March 26, 1999, 1999).
13. S. D. Ittel, L. K. Johnson, M. Brookhart, Late-Metal Catalysts for Ethylene Homo-and Copolymerization. Chemical Reviews 100, 1169 (2000/04/01, 2000).
14. A. Nakamura et al., Ortho-Phosphinobenzenesulfonate: A Superb Ligand for Palladium-Catalyzed Coordination-Insertion Copolymerization of Polar Vinyl Monomers. Accounts of Chemical Research, (2013).
15. A. Nakamura, S. Ito, K. Nozaki, Coordination,àíInsertion Copolymerization of Fundamental Polar Monomers. Chemical Reviews 109, 5215 (2009/11/11, 2009).
16. M. P. McDaniel, in Handbook of Transition Metal Polymerization Catalysts. (John Wiley & Sons, Inc., 2010), pp. 291-446.
17. M. P. McDaniel, in Adv. Catal., C. G. Bruce, K. z. Helmut, Eds. (Academic Press, 2010), vol. Volume 53, pp. 123-606.
18. M. P. McDaniel, K. S. Collins, E. A. Benham, Activation of Phillips Cr/silica catalysts: IV. Mobility of Cr(VI). J. Catal. 252, 281 (2007).
19. E. Groppo, J. Estephane, C. Lamberti, G. Spoto, A. Zecchina, Ethylene, propylene and ethylene oxide in situ polymerization on the Cr(II)/SiO2 system: A temperature-and pressure-dependent investigation. Catal. Today 126, 228 (2007).
20. B. M. Weckhuysen, R. A. Schoonheydt, Olefin polymerization over supported chromium oxide catalysts. Catal. Today 51, 215 (Jun 30, 1999).
21. E. Groppo, C. Lamberti, S. Bordiga, G. Spoto, A. Zecchina, The Structure of Active Centers and the Ethylene Polymerization Mechanism on the Cr/SiO2 Catalyst:,Äâ A Frontier for the Characterization Methods. Chemical Reviews 105, 115 (2005/01/01, 2005).
22. S. Bordiga, E. Groppo, G. Agostini, J. A. van Bokhoven, C. Lamberti, Reactivity of Surface Species in Heterogeneous Catalysts Probed by In Situ X-ray Absorption Techniques. Chemical Reviews 113, 1736 (2013/03/13, 2013).
23. T. Nguyen et al., Synthesis of a Stable Compound with Fivefold Bonding Between Two Chromium(I) Centers. Science 310, 844 (November 4, 2005, 2005).
24. K. H. Theopold, Homogeneous Chromium Catalysts for Olefm Polymerization. European Journal of Inorganic Chemistry 1998, 15 (1998).
25. K. H. Theopold, Organochromium(III) chemistry: a neglected oxidation state. Accounts of Chemical Research 23, 263 (1990/08/01, 1990).
26. L. A: MacAdams, G. P. Buffone, C. D. Incarvito, A. L. Rheingold, K. H. Theopold, A Chromium Catalyst for the Polymerization of Ethylene as a Homogeneous Model for the Phillips Catalyst. Journal of the American Chemical Society 127, 1082 (2005/02/01, 2005).
27. K. Albahily et al., Chromium Catalysts Supported by a Nonspectator NPN Ligand: Isolation of Single-Component Chromium Polymerization Catalysts. Angewandte Chemie International Edition 47, 5816 (2008).
28. K. Albahily, D. Al-Baldawi, S. Gambarotta, E. Koç, R. Duchateau, Isolation of a Chromium Hydride Single-Component Ethylene Polymerization Catalyst. Organometallics 27, 5943 (2008/11/24, 2008).
29. A. Jabri et al., Isolation of Single-Component Trimerization and Polymerization Chromium Catalysts: The Role of the Metal Oxidation State. Angewandte Chemie International Edition 47, 9717 (2008).
30. M. P. McDaniel, S. J. Martin, Poisoning studies on chromium/silica. 2. Carbon monoxide. J. Phys. Chem. 95, 3289 (1991/04/01, 1991).
31. B. M. Weckhuysen, I. E. Wachs, R. A. Schoonheydt, Surface chemistry and spectroscopy of chromium in inorganic oxides. Chemical Reviews 96, 3327 (Dec, 1996).
32. C. Copéret, M. Chabanas, R. Petroff Saint-Arroman, J.-M. Basset, Homogeneous and Heterogeneous Catalysis: Bridging the Gap through Surface Organometallic Chemistry. Angewandte Chemie International Edition 42, 156 (2003).
33. S. L. Wegener, T. J. Marks, P. C. Stair, Design Strategies for the Molecular Level Synthesis of Supported Catalysts. Accounts of Chemical Research 45, 206 (2012/02/21, 2011).
34. M. Tada, Y. Iwasawa, Advanced design of catalytically active reaction space at surfaces for selective catalysis. Coordination Chemistry Reviews 251, 2702 (2007).
35. J. M. Thomas, R. Raja, D. W. Lewis, Single-Site Heterogeneous Catalysts. Angewandte Chemie International Edition 44, 6456 (2005).
36. T. J. Marks, Surface-bound metal hydrocarbyls. Organometallic connections between heterogeneous and homogeneous catalysis. Accounts of Chemical Research 25, 57 (1992/02/01,1992).
37. M. Chabanas, A. Baudouin, C. Cop√©ret, J.-M. Basset, A Highly Active Well-Defined Rhenium Heterogeneous Catalyst for Olefin Metathesis Prepared via Surface Organometallic Chemistry. Journal of the American Chemical Society 123, 2062 (2001/03/01, 2001).
38. N. Rendon, F. Blanc, C. Copéret, Well-defined silica supported metallocarbenes: Formation and reactivity. Coordination Chemistry Reviews 253, 2015 (2009).
39. J. M. Thomas, R. Raja, Exploiting Nanospace for Asymmetric Catalysis: Confinement of Immobilized, Single-Site Chiral Catalysts Enhances Enantioselectivity. Accounts of Chemical Research 41, 708 (2008/06/01, 2008).
40. J. Corker et al., Catalytic Cleavage of the C-H and C-C Bonds of Alkanes by Surface Organometallic Chemistry: An EXAFS and IR Characterization of a Zr-H Catalyst. Science 271, 966 (February 16, 1996, 1996).
41. V. Vidal, A. Théolier, J. Thivolle-Cazat, J.-M. Basset, Metathesis of Alkanes Catalyzed by Silica-Supported Transition Metal Hydrides. Science 276, 99 (April 4, 1997, 1997).
42. P. Avenier et al., Dinitrogen Dissociation on an Isolated Surface Tantalum Atom. Science 317, 1056 (August 24, 2007, 2007).
43. J. A. N. Ajjou, S. L. Scott, V. Paquet, Synthesis and characterization of silica-stabilized chromium(IV) alkylidene complexes. Journal of the American Chemical Society 120, 415 (Jan 21, 1998).
44. J. A. N. Ajjou, S. L. Scott, A kinetic study of ethylene and 1-hexene homo- and copolymerization catalyzed by a silica-supported Cr(IV) complex: Evidence for propagation by a migratory insertion mechanism. Journal of the American Chemical Society 122, 8968 (Sep 20, 2000).
45. R. R. Rao, B. M. Weckhuysen, R. A. Schoonheydt, Ethylene polymerization over chromium complexes grafted onto MCM-41 materials. Chemical Communications, 445 (Mar 7, 1999).
46. B. M. Weckhuysen et al., Synthesis, spectroscopy and catalysis of Cr(acac)(3) complexes grafted onto MCM-41 materials: Formation of polyethylene nanofibres within mesoporous crystalline aluminosilicates. Chem. Eur. J. 6, 2960 (Aug 18, 2000).
47. C. A. Demmelmaier, R. E. White, J. A. van Bokhoven, S. L. Scott, Nature of equivSiOCrO 2Cl and (equivSiO) 2CrO 2 sites prepared by grafting CrO 2Cl 2 onto silica. J. Phys. Chem. C 116, 6439 (24 April, 2008).
48. L. Zhong et al., Spectroscopic and structural characterization of Cr(II)/SiO2 active site precursors in model Phillips polymerization catalysts. J. Catal. 293, 1 (Sep, 2012).
49. K. W. Terry, P. K. Ganzel, T. D. Tilley, LOW-TEMPERATURE PYROLYTIC TRANSFORMATIONS OF TRI-TERT-BUTOXYSILOXY DERIVATIVES OF ALUMINUM TO ALUMINOSILICATE MATERIALS. Chemistry of Materials 4, 1290 (Nov-Dec, 1992).
50. K. Su, T. D. Tilley, M. J. Sailor, Molecular and polymer precursor routes to manganese-doped zinc orthosilicate phosphors. Journal of the American Chemical Society 118, 3459 (Apr 10, 1996).
51. K. W. Terry, C. G. Lugmair, T. D. Tilley, Tris(tert-butoxy)siloxy complexes as single-source precursors to homogeneous zirconia- and hafnia-silica materials. An alternative to the sol-gel method. Journal of the American Chemical Society 119, 9745 (Oct 15, 1997).
52. D. C. Bradley, M. B. Hursthouse, C. W. Newing, A. J. Welch, Square planar and tetrahedral chromium(II) complexes; crystal structure determinations. Journal of the Chemical Society, Chemical Communications 0, 567 (1972).
53. O. L. Sydora *et al.,* The Butterfly Dimer [(tBu3SiO)Cr]2( 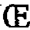 °-OSitBu3)2 and Its Oxidative Cleavage to (tBu3SiO)2Cr(N,àíNCPh2)2 and (tBu3SiO)2CrN(2,6-Ph2-C6H3). *Inorganic Chemistry* **45,** 2008 (2006/03/01, 2006).
54. K. W. Terry, P. K. Gantzel, T. D. Tilley, Chromium(II) and chromium(III) tri-tert-butoxysiloxy complexes. Inorganic Chemistry 32, 5402 (1993/11/01, 1993).
55. D. Gianolio et al., Direct evidence of adsorption induced CrII mobility on the SiO2 surface upon complexation by CO. Chemical Communications 46, 976 (2010).
56. A. Zecchina, E. Garrone, G. Ghiotti, S. Coluccia, Chemistry of silica supported chromium ions. II. One-ligand complexes. Adsorption of carbon monoxide, carbon dioxide, and pyridine. J. Phys. Chem. 79, 972 (1975/05/01, 1975).
57. A. Zecchina, G. Spoto, G. Ghiotti, E. Garrone, Cr2+ ions grafted to silica and silicalite surfaces: FTIR characterization and ethylene polymerization activity. Journal of Molecular Catalysis 86, 423 (1994).
58. E. Groppo, A. Damin, C. Otero Arean, A. Zecchina, Enhancing the Initial Rate of Polymerisation of the Reduced Phillips Catalyst by One Order of Magnitude. Chemistry - A European Journal 17, 11110 (2011).
59. ((2) O. V. Dolomanov, L. J. Bourhis, R. J. Gildea, J. A. K. Howard and H. Puschmann, OLEX2: a complete structure solution, refinement and analysis program. J. Appl. Cryst. (2009). 42, 339-341.
60. SHELXS-97 (Sheldrick, 2008)
61. XL, G.M. Sheldrick, Acta Cryst. (2008). A64, 112-122
62. B. Ravel and M. Newville, Journal of Synchrotron Radiation, 12 (2005) 537.
63. E. Tioni, J-P. Broyer, T.F.L. McKenna, R. Spitz, V. Monteil AIChE J. (2012), 58, 256.
64. S. Grundener, L.Zhong, S.L. Scott, A Well-Defined, Silica-Supported Organochromium Catalyst for Ethylene Polymerization Models the Phillips Catalyst, http://events.dechema.de/events/en/Events/Materials+for+Energy+_+EnMat+II/Congr ess+Planer/Datei_Handler-tagung-564-file-1270-p-127866.htm
65. Ikeda, H.; Monoi, T.; Sasaki, Y. J. Polym. Sci., Part A: Polym. Chem. 2003, 41, 413.
66. Ikeda, H.; Monoi, T.; Sasaki, Y.; Matsumoto, Y. Polym. J. 2003, 35, 608.
67. Ciborska et al, Acta Crystallographica Section E, 2007, 63, m1103-m1104
68. Thaler, E. G.; Rypdal, K.; Haaland, A.; Caulton, K. G. Inorganic Chemistry 1989, 28, 2431-2434.
69. Fujdala K. L., Tilley D. Chem Mater., 2001, 13(5), 1817-1827
70. Köhn, R. D.; Kociok-Kohn, G.; Haufe, M. Chemische Berichte 1996, 129, 25-27.

## Claims

1. Use of a molecular precursor chromium compound for producing a chromium on silica catalyst, said molecular precursor compound being a chromium(II) and/or a chromium(III) and/or a chromium (IV) compound wherein all ligands are easily removable, in particular ligands selected from the group consisting of anionic ligands of the type -O-CR³R⁴-CH-R¹R² or -O-Si-(O-CR³R⁴-CHR¹R²)₃ wherein R1, R2, R3 and R4 may be the same or different and may be any group that does not affect decomposition of the ligand via elimination of beta-hydrogen from -CR³R⁴-CH-R¹R², and amide anionic ligands of the type -N-(Si-R⁵R⁶R⁷)₂ and/or -N-(C-R⁵R⁶R⁷)₂ wherein R⁵, R⁶ and R⁷ can be the same or different and are preferably selected from hydrogen, methyl groups, ethyl groups, n-propyl groups, iso-propyl groups, tert-butyl groups or aromatic groups; as well as coordinating solvents, in particular a monomeric or dimeric molecular precursor chromium compound.

2. The use of claim 1 wherein R¹ to R⁴ are independently from each other selected from the group consisting of hydrogen, methyl groups, ethyl groups, n-propyl groups, iso-propyl groups, tert-butyl groups, and aryl groups, preferably R¹ to R⁴ are independently from each other selected from the group consisting of hydrogen, methyl and phenyl, most preferred R¹ and R² are hydrogen, and R³ and R⁴ are methyl.

3. The use of any of the preceding claims, wherein at least one of the anionic ligands is selected from the group consisting of *tri*-*tert*-butoxysilanolate (-OSi(O^{t}Bu)₃) and hexamethyldisilazide (-N(SiMe₃)₂).

4. The use of any of the preceding claims, wherein the molecular precursor chromium compound is a dimer wherein all ligands are -O-CR³R⁴-CH-R¹R² and/or -O-Si-(O-CR³R⁴-CHR¹R²)₃.

5. The use of any of the preceding claims, wherein the molecular precursor chromium compound is selected from Cr(N(Si(CH₃)₃)₂)₃, [Cr(OSi(O^{t}Bu)₃)₂]₂, Cr(O^{t}Bu)_{4,} Cr(OSi(O^{t}Bu)₃)₃*2thf, and C₄₈H₁₀₈Cr₂O₁₇Si₄ **(5),** in particular C₄₈H₁₀₈Cr₂O₁₇Si₄ **(5)** and [Cr(OSi(O^{t}Bu)₃)₂]₂.

6. A molecular precursor chromium compound as defined in any of claims 1 to 5 that is suitable for use in producing a chromium on silica catalyst, with the proviso that the molecular precursor chromium compound is not
Cr(N(Si(CH₃)₃)₂)₃, Cr(OSi(OtBu)₃)₃*2thf, Cr(O^{t}Bu)₄, Cr(O^{t}Bu)₃(O-Si(O^{t}Bu)₃), Cr(O^{t}Bu)₂(O-Si(O^{t}Bu)₃)₂,Cr(HNEt₂₎₂(O-Si(O^{t}Bu)₃)₂, and Cr(HNEt₂)₂(O-Si(O^{t}Bu)₃)₃.

7. A chromium on silica catalyst precursor, wherein at least one ligand of the molecular precursor compound as defined in any of claims 1 to 5 or of claim 6 is replaced by a surface O-Si-O group (≡SiO).

8. The chromium on silica catalyst precursor of claim 7, that is a Cr(II) or Cr(III) or Cr(IV) compound comprising ligands and being attached to the silica surface via at least one Si-O bond, in particular [(≡SiO)Cr₂(OSi(O^{t}Bu)₃)₃] or C₄₈H₁₀₈Cr₂O₁₇Si₄ grafted on silica **(6)** or[(≡SiO)Cr(OSi(O^{t}Bu)₃)₂(tht)].

9. The chromium on silica catalyst precursor of claim 7, that is a Cr(II) compound attached to the silica surface via Si-O bonds, wherein all ligands have been removed or replaced by a surface O-Si-O group (≡SiO), in particular [(≡SiO)₄Cr₂].

10. A chromium on silica catalyst that is a Cr(III) or Cr(IV) compound attached to the silica surface via Si-O bonds, wherein all ligands have been either removed or replaced by a surface O-Si-O group (≡SiO), in particular such a Cr(III) compound, especially [(≡SiO)₆Cr₂] or [(≡SiO)₃Cr].

11. A method for producing a molecular precursor chromium compound, in particular a molecular precursor chromium compound suitable for the use of any of claims 1 to 5 or of claim 6 comprising treating a Cr(II) or Cr(III) or Cr(IV) starting compound, in particular Cr(HMDS)₂*2thf or Cr(HMDS)₃ or CrCl₃*3thf or CrCl₃ or CrCl₂*2thf or CrCl₂, with one or more ligand precursor(s) like protonated ligands and/or one or more metal salts of the ligand, wherein the ligand(s) are as defined in any of claims 1 to 6 under conditions that allow coordination of the one or more ligands, in particular by reacting a slurry of the Cr(II) or Cr(III) or Cr(IV) starting compound in a non coordinating solvent at temperatures of -40 to 150°C, preferentially at temperatures comprised between 15 and 40 °C.

12. A method for producing a chromium on silica catalyst precursor of claim 8 comprising treating silica with a molecular precursor chromium compound as defined in any of claims 1 to 5 or of claim 6, said compound being a Cr(II) and/or a Cr(III) and/or a Cr(IV) molecular precursor chromium compound, in particular a Cr(II) and/or a Cr(III) molecular precursor chromium compound.

13. A method for producing a chromium on silica catalyst precursor of claim 9, comprising treating a chromium on silica catalyst precursor of claim 8 that is a Cr(II) precursor for a time and at a temperature suitable for removing all the ligands, in particular under vacuum or under a flow of inert gas at a temperature comprised between 100 and 900 °C, preferably between 200 and 700 °C and more preferably between 220 and 500 °C.

14. A method for producing a chromium on silica catalyst comprising thermally treating a chromium on silica catalyst precursor of claim 8, in particular a Cr(II) or Cr(III) chromium on silica catalyst precursor, for a time and at a temperature suitable for removing all the ligands, in particular under vacuum or under a flow of inert gas at a temperature comprised between 100 and 900 °C, preferably between 200 and 700 °C and more preferably between 220 and 500 °C, and optionally oxidizing.

15. A method for producing a chromium on silica catalyst comprising oxidizing a chromium on silica catalyst precursor of claim 9, in particular with N₂O, much preferred at a temperature of 20 to 300 °C, more preferred 20 to 150 °C, most preferred about 100 °C.

16. A method for converting a Cr(II) molecular precursor or chromium (II) on silica catalyst precursor into a Cr(III) molecular precursor or chromium (III) on silica catalyst precursor or chromium (III) on silica catalyst comprising treating the Cr(II) molecular precursor or chromium on silica catalyst precursor with an oxidizing agent such as N₂O in particular at a temperature of 20 to 300 °C, more preferred 20 to 150 °C, most preferred at about 20 °C for the molecular precursor and at about 100 °C for the chromium on silica catalyst precursor.

17. A method for producing polyethylene (PE) said method comprising polymerizing ethylene at a pressure of 100 mbar to 50 bar, preferably 1 bar to 25 bar, in particular at 6 bar and in the presence of a chromium(III) on silica catalyst of claim 10.

18. A use of a chromium(III) on silica catalyst for producing polyethylene (PE), in particular a chromium (III) on silica catalyst of claim 10, e.g. for producing polyethylene (PE) in the gas phase or in a slurry containing an organic solvent.
